# EUROPÄISCHE PATENTANMELDUNG

(11) **EP 1 284 474 A2**
(43) Veröffentlichungstag der Anmeldung: **19.02.2003**
(21) Anmeldenummer: 02018063.4
(22) Anmeldetag: 13.08.2002
(51) Int. Cl.: G07F 19/00

(54) **Computersystem und Verfahren zur bargeldlosen Bezahlung**

(30) Priorität: 14.08.2001 DE 10138814
(71) Anmelder: Orga Kartensysteme GmbH, 33104 Paderborn (DE)
(72) Erfinder: Brehme, Benjamin, 33104 Paderborn (DE); Kühle, Michael, 33100 Paderborn (DE); Sturm, Oliver, 33098 Paderborn (DE)

(57) **Zusammenfassung**

Die Erfindung betrifft ein Computersystem und ein Verfahren zur bargeldlosen Bezahlung mit folgenden Schritten:
- Übertragung eines von einem Benutzer zu bezahlenden Betrags von einem Online-Shop an einen Web-Server,
- Authentifizierung des Benutzers gegenüber dem Web-Server,
- Belastung eines Kontos des Benutzers seitens des Web-Servers.

## Beschreibung

Die Erfindung betrifft ein Computersystem und ein Verfahren zur bargeldlosen Bezahlung, insbesondere für die Zwecke des E-Commerce und des M-Commerce.

Aus dem Stand der Technik sind verschiedene Systeme und Verfahren für die bargeldlose Bezahlung bekannt:

Aus US-A- 5, 857, 152 ist ein mobiles Kommunikationsgerät mit einer elektronischen Geldbörse bekannt, die Teil eines elektronischen Zahlungssystems ist. Diese elektronische Geldbörse kann zur Bezahlung verschiedene Gebühren, z. B. Mautgebühren für die Benutzung einer Straße oder auch für die Bezahlung von Eintrittsgeldern für eine Unterhaltungsveranstaltung benutzt werden. Eine weitere elektronische Brieftasche ist aus US-A- 6, 250, 557 bekannt.

Ebenso ist es aus dem Stand der Technik bekannt, Telefongebühren mittels sogenannter pre-paid Bezahlungssysteme zu entrichten. Solche Systeme sind z. B. aus US-A- 5, 915, 226; US-A- 6, 226, 366; US-A- 6, 236, 851; WO 95 / 35619 und WO 95 / 34161 bekannt.

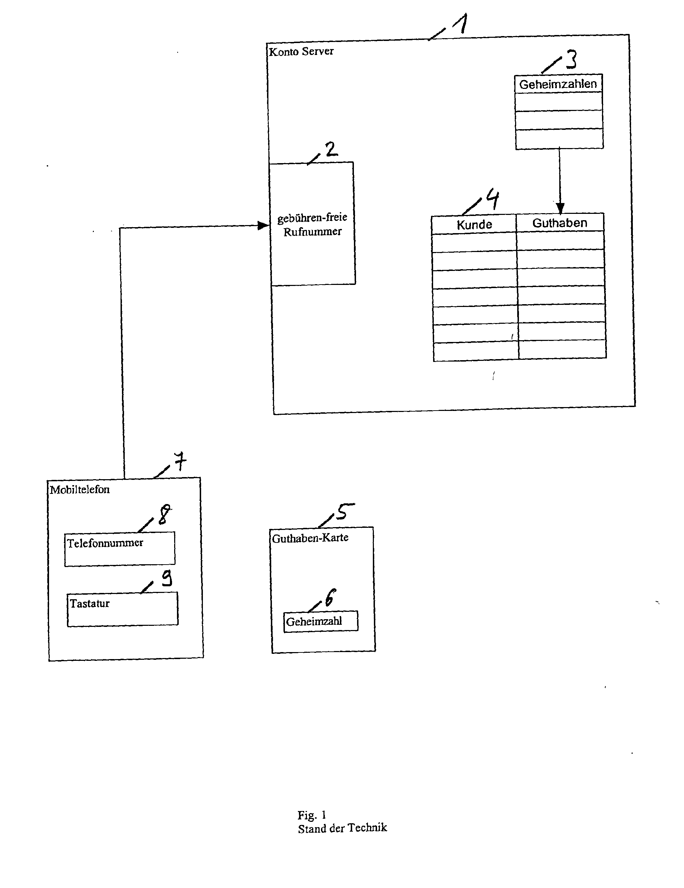

Anhand der Fig. 1 wird im Weiteren ein solches vorbekanntes pre-paid System exemplarisch erläutert. Das System beinhaltet einen Konto-Server 1 mit einer Telefonschnittstelle 2, der eine gebührenfreie Rufnummer zugeordnet ist. Ferner beinhaltete der Konto-Server 1 eine Datenbank 3 mit einer Liste von Geheimzahlen. In einer weiteren Datenbank 4 ist jedem Kunden ein Kontoguthaben zugeordnet. Beispielsweise wird jeder Kunde durch dessen Telefonnummer in der Datenbank 4 eindeutig identifiziert.

Wenn der Kunde Telefongespräche führt, werden die entsprechenden Telefongebühren dem Guthaben in der Datenbank 4 belastet. Zur Auffüllung des Guthabens kauft der Kunde eine Guthabenkarte 5, die eine Geheimzahl 6 trägt. Die Geheimzahl 6 wird z. B. durch "Wegrubbeln" einer die Geheimzahl 6 der Guthabenkarte 5 überdeckenden Schicht freigelegt.

Zum Auffüllen seines Guthabens in der Datenbank 4 wählt der Kunde von seinem Mobiltelefon 7, dem eine Telefonnummer 8 zugeordnet ist, die gebührenfreie Rufnummer des Konto-Servers 1 bzw. von dessen Telefonschnittstelle 2. Beim Aufbau der Telefonverbindung zwischen dem Mobiltelefon 7 und dem Konto-Server 1 wird die Telefonnummer 8 des Mobiltelefons 7 mit zu dem Konto-Server 1 über die Telefonverbindung übertragen - dieses wird auch als Caller Line Identification bezeichnet und ist ein Standarddienst in digitalen Telefonnetzwerken. Aufgrund der von dem Mobiltelefon 7 zu dem Konto-Server 1 übertragenen Telefonnummer 8 ist daher der Kunde allein durch seinen Anruf gegenüber dem Konto-Server 1 identifiziert.

Nach Aufbau der Telefonverbindung zwischen dem Mobiltelefon 7 und dem Konto-Server 1 gibt der Kunde dann die Geheimzahl 6 der Guthabenkarte 5 z. B. über die Tastatur 9 seines Mobiltelefons 7 ein, so dass diese von dem Mobiltelefon 7 an den Konto-Server 1 übertragen wird. Der Konto-Server 1 prüft dann, ob eine entsprechende Geheimzahl in der Datenbank 3 vorliegt. Ist dies der Fall, so wird ein entsprechendes Guthaben für den durch seine Telefonnummer 8 identifizierten Kunden in der Datenbank 4 gutgeschrieben. Dieses Guthaben kann dann wiederum durch weitere Telefonverbindungen mit dem Mobiltelefon 7 aufgebraucht werden.

Die Telefonnummer 8 des Mobiltelefons 7 wird im GSM Standard auch als MSISDN (Mobile Subscriber Integrated Services Digital Number) bezeichnet.

Ein solches System wird beispielsweise in dem D2-CallYa Produkt von Vodafone angeboten (www.d2vodafone.de/callya).

Der Erfindung liegt die Aufgabe zu Grunde, ein verbessertes System zur bargeldlosen Bezahlung zu schaffen.

Die der Erfindung zu Grunde liegende Aufgabe wird mit den Merkmalen der unabhängigen Patentansprüche jeweils gelöst.

Bevorzugten Ausführungsformen der Erfindung sind in den abhängigen Ansprüchen angegeben.

Die Erfindung erlaubt es, einem Benutzer die Bezahlung von Produkten und Dienstleistungen eines Online-Shops durch Belastung seines pre-paid Guthabens auf einem Web-Server vorzunehmen. Von besonderem Vorteil ist dabei für den Benutzer, dass er gegenüber dem Online-Shop völlig anonym bleiben kann.

Die Anonymität des Benutzers gegenüber dem Online-Shop kann aus verschiedenen Gründen von dem Benutzer gewünscht sein. Beispielsweise kann es der Benutzer auf diese Art und Weise vermeiden, unerwünschte E-Mail Mitteilungen oder Werbung per Post zu erhalten. Ferner ist es auch bei verschiedenen Erotik-Produkten und Dienstleistungen so, dass der Benutzer im Allgemeinen anonym bleiben möchte.

Die Erfindung bietet eine bequeme und sichere Art und Weise der Bezahlung solcher Online-Produkte, also Online erbrachter Dienstleistungen und / oder Online gelieferter Waren. Hierbei kann es sich z. B. um Bilddaten, Musik, Videos, Sprache sowie jede andere Form von elektronisch übertragbaren Daten handeln.

Auch für die bequeme Bezahlung von Informationsdienstleistungen, z. B. Datenbankabfragen oder sonstigen Informationsdiensten, kann die Erfindung vorteilhaft eingesetzt werden, indem der Benutzer solcher Dienstleistungen die Bezahlung anonym mittels dessen bei seinem Mobiltelefon Serviceprovider angelegten pre-paid Konto vornimmt.

Ein besonderer Vorteil der Erfindung ist darin zu sehen, dass die Bezahlung für alle Beteiligten sicher erfolgt und Betrug oder Missbrauch quasi ausgeschlossen ist und dass andererseits der Benutzer anonym bleiben kann und persönliche Daten, wie z. B. seine Anschrift, Telefonnummer, E-Mail Adresse oder Kreditkartennummer nicht gegenüber einem Online-Shop offenbaren muss, über dessen Vertrauenswürdigkeit der Benutzer im Allgemeinen im Unklaren ist. Für die notwendige Sicherheit des Systems wird durch eine Authentifizierung des Benutzers gegenüber dem Web-Server z.B. seiner Mobiltelefongesellschaft gesorgt, auf welcher sein Guthabenkonto geführt wird.

Nach einer bevorzugten Ausführungsform der Erfindung wird das pre-paid Guthabenkonto auf einem Konto-Server geführt, der sowohl für die Belastung des Guthabens mit Mobiltelefongesprächsgebühren als auch für die Belastung des Guthabens mit zu bezahlenden Beträgen zu Gunsten eines Online-Shops verwendet wird.

Nach einer weiteren bevorzugten Ausführungsform der Erfindung erfolgt die Bezahlung von Gesprächsgebühren und die Bezahlung von anderen Online-erbrachten Dienstleistungen oder Produkten mittels separater pre-paid Konten.

Alternativ kann die Bezahlung erfindungsgemäß auch mit einem anderen Bezahlverfahren abgewickelt werden, z. B. durch Belastung einer Kreditkartennummer des Benutzers, durch Kontoeinzug oder per Rechnung, wobei der Web-Server als Treuhänder agiert. Beispielsweise kann in einem Nutzerprofil auf dem Web-Server die Kreditkartennummer des Benutzers hinterlegt sein, so dass der Web-Server, nachdem sich der Nutzer authentifiziert hat, mit einem Server des Kreditkartenunternehmens Kontakt aufnimmt, um die Zahlung abzuwickeln.

Ferner kann in dem Nutzerprofil auch die Kontonummer für den Kontoeinzug oder eine Rechnungsanschrift abgelegt sein. Die entsprechenden Zahlungsbeträge werden von dem Betreiber des Web-Servers eingezogen und treuhänderisch verwaltet. Die Abrechnung erfolgt dann zwischen dem Web-Server und dem Online-Shöp, wobei die Anonymität der Benutzer von dem Web-Server gegenüber dem Online-Shop gewahrt bleiben kann.

Im Weiteren werden bevorzugte Ausführungsbeispiele der Erfindung mit Bezugnahme auf die Zeichnungen näher erläutert. Es zeigen:
- Fig. 1.: ein pre-paid Mobiltelefonsystem aus dem Stand der Technik,
- Fig. 2.: eine Ausführungsform eines erfindungsgemäßen Computersystems,
- Fig. 3.: eine Ausführungsform eines erfindungsgemäßen Verfahrens für die Bezahlung von Online-Produkten mittels eines pre-paid Guthaben,
- Fig. 4: eine Ausführungsform eines erfindungsgemäßen Computersystems mit verschiedenen weiteren Zahloptionen für einen Benutzer,
- Fig. 5: ein Blockdiagramm einer bevorzugten Ausführungsform mit Authentifizierung über ein Mobiltelefon,
- Fig. 6: ein entsprechendes Flussdiagramm zur Authentifizierung mittels eines Mobiltelefons.

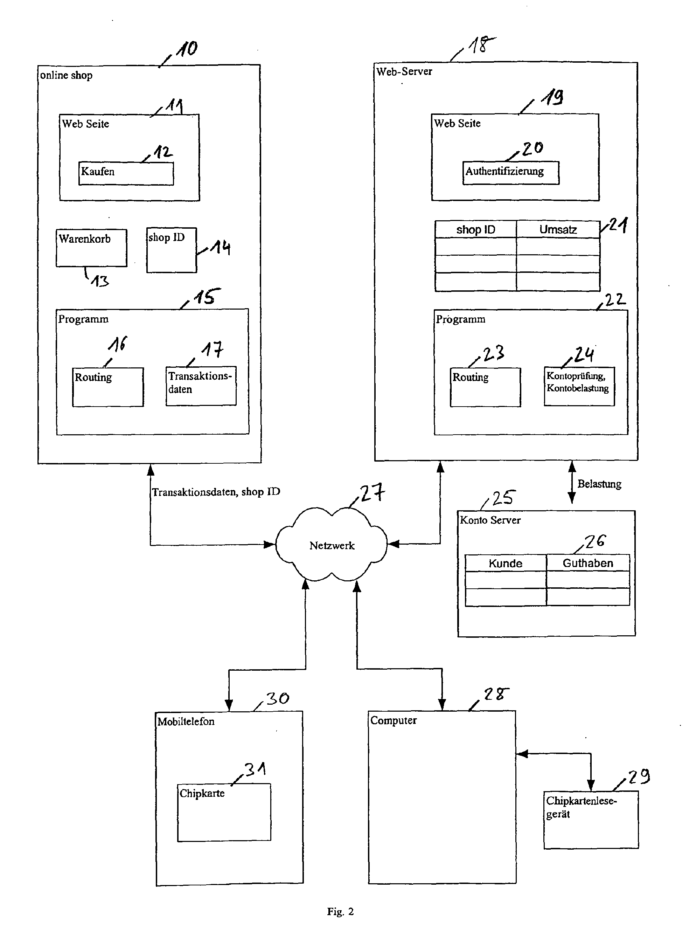

Die Fig. 2 zeigt einen Online-Shop 10. Der Online-Shop 10 beinhaltet zumindest eine Web-Seite 11 für die Auswahl von Online-Produkten. Vorzugweise ist die Web-Seite 11 Teil eines Katalogsystems.

In dem hier betrachteten Anwendungsfall werden auf dem Online-Shop 10 bzw. dessen Web-Seite 11 Produkte und Dienstleistungen und Waren angeboten, die Online durch Lieferung entsprechender Daten erbracht werden bzw. geliefert werden. Hierbei handelt es sich z. B. um Datenbankinformation, Nachrichten, Bilddaten, Musikdaten, Videos und dergleichen. Die Erfindung ist jedoch nicht auf online-Produkte beschränkt, sondern kann auch für die Bezahlung von anderen Produkten, wie z.B. Büchern, CDs und anderen Waren und Dienstleistungen verwendet werden.

Die Web-Seite 11 beinhaltet ein virtuelles Betätigungselement 12. Durch "Anklicken" des Betätigungselements 12 kann ein Benutzer eine Kaufentscheidung für ein Online-Produkt auf der Web-Seite 11 eingeben. Hierbei kann es sich beispielsweise um einen sogenannten "Button" mit der Aufschrift "OK" oder "Confirm" oder "Jetzt kaufen" handeln.

Der Online-Shop 10 beinhaltet ferner einen Warenkorb 13, der von einem Benutzer durch Auswahl von Online-Produkten auf der Web-Seite 11 gefüllt werden kann. Durch Betätigung des Betätigungselements 12 gibt der Benutzer seine Kaufentscheidung für die in dem Warenkorb 13 befindlichen Online-Produkte in den Online-Shop 10 ein.

Der Online-Shop 10 hat eine Kennung 14 ("Shop ID"). Die Kennung 14 identifiziert den Online-Shop 10 eindeutig.

Ferner hat der Online-Shop 10 ein Programm 15 mit einer Programmkomponente 16 und mit einer Programmkomponente 17. Die Programmkomponente 17 dient zur Erzeugung einer Transaktionsdatei, wenn der Benutzer das Betätigungselement 12 z.B. durch "Anklicken" selektiert hat, um seine Kaufentscheidung einzugeben. Die Transaktionsdaten beinhalten zumindest den Gesamtkaufpreis für die Online-Produkte in dem Warenkorb 13 sowie die Kennung 14 des Online-Shop 10 sowie eine Transaktionsnummer.

Die Programmkomponente 16 dient zum Routing der Verbindung des Benutzers vom dem Online-Shop 10 zu einem Web-Server 18, nachdem der Benutzer seine Kaufentscheidung durch "Anklicken" des Betätigungselements 12 eingegeben hat.

Der Web-Server 18 hat zumindest eine Web-Seite 19 mit einem Authentifizierungsmodul 20. Das Authentifizierungsmodul 20 dient zur Authentifizierung eines Benutzers gegenüber dem Web-Server 18. Dabei kann jede beliebige Authentifizierungsmethode eingesetzt werden, so z.B. die Eingabe eines Benutzernamens und eines Passworts oder mittels einer Public Key Infrastruktur.

Bei Verwendung einer Public Key Infrastruktur (PKI) wird für die Zwecke der Authentifizierung beispielsweise seitens des Web-Servers eine Zufallszahl generiert, die mittels eines Algorithmus in einem bestimmten Wert transformiert wird. Dieser Wert wird dann an den Benutzer übertragen. Dort wird der Wert benutzerseitig zurücktransformiert und mit dem Private Key des Benutzers signiert. Der zurücktransformierte und signierte Wert wird dann an den Web-Server zurückübertragen, so dass dort mittels des Public Key des Benutzers die Authentifizierung erfolgen kann.

Der Web-Server 18 hat ferner eine Datenbank 21. Die Datenbank 21 dient zur Zuordnung von getätigten Umsätzen zu verschiedenen Online-Shops. Ein Eintrag in der Datenbank 21 beinhaltet dabei den einem bestimmten Online-Shop zugeordneten Umsatz. Auf einen solchen Eintrag in der Datenbank 21 kann mittels der Kennung, das heißt, der "Shop ID" als Schlüssel zugegriffen werden. Die Datenbank 21 dient zur Abrechnung zwischen dem Online-Shop 10 und dem Web-Server 18.

Der Web-Server 18 hat ferner ein Programm 22 mit einer Programmkomponente 23 und mit einer Programmkomponente 24. Die Programmkomponente 24 dient zur Herstellung einer Verbindung zwischen dem Web-Server 18 und einem Konto-Server 25.

Der Konto-Server 25 beinhaltet eine Datenbank 26. Jeder Eintrag in der Datenbank 26 beinhaltet ein einem bestimmten Kunden zugeordnetes Guthaben. Ein Kunde kann beispielsweise durch seine Mobiltelefonnummer oder durch einen anderen Schlüssel eindeutig identifiziert sein. Das Auffüllen eines in der Datenbank 26 für einen Kunden gespeichertes Guthaben kann beispielsweise, wie an sich aus dem Stand der Technik bekannt, mit einer Guthaben-Karte erfolgen (vgl. Guthabe-Karte 5 der Fig. 1).

Nach der Herstellung der Verbindung zwischen dem Web-Server 18 und dem Konto-Server 25 prüft die Programmkomponente 24 den Kontostand des betreffenden Kunden und belastet das Konto gegebenenfalls mit dem zu bezahlenden Betrag.

Die Programmkomponente 23 dient zum Zurückrouten einer Verbindung des Benutzers zu dem Online-Shop, nachdem die Bezahlung erfolgt ist.

Der Online-Shop 10 und der Web-Server 18 sind über ein Netzwerk 27 miteinander verbindbar. Bei dem Netzwerk 27 handelt es sich vorzugsweise um ein Intranet, Extranet oder das Internet. Ferner kann es sich bei dem Netzwerk 27 auch um ein Mobiltelefonnetzwerk handeln oder das Netzwerk 27 kann ein solches Mobiltelefonnetzwerk beinhalten.

Der Konto-Server 25 kann einen integralen Bestandteil des Web-Servers 18 bilden oder kann unmittelbar an diesen angeschlossen sein. Der Konto-Server 25 kann jedoch auch über das Netzwerk 27 mit dem Web-Server 18 verbindbar sein, das heißt, der Web-Server 18 und der Konto-Server 25 können auf unterschiedlichen Server-Computern an unterschiedlichen Orten realisiert sein, wie auch der Online-Shop 10.

Ein Benutzer kann von einem üblichen Personal Computer 28, der einen sogenannten Web-Browser aufweist, über das Netzwerk 27 mit der Web-Seite 11 des Online-Shops 10 in Verbindung treten. An den Computer 28 kann ein Chipkartenlesegerät 29 angeschlossen sein. Das Chipkartenlesegerät 29 kann beispielsweise für die Zwecke der Authentifizierung gegenüber dem Authentifizierungsmodul 20 durch Einführen einer entsprechenden Chipkarte verwendet werden.

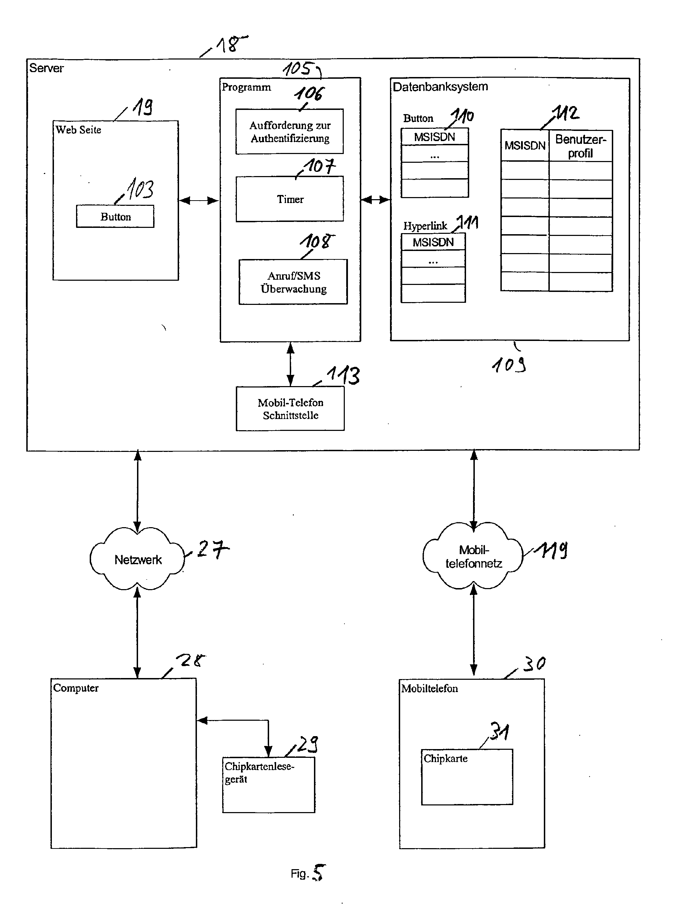

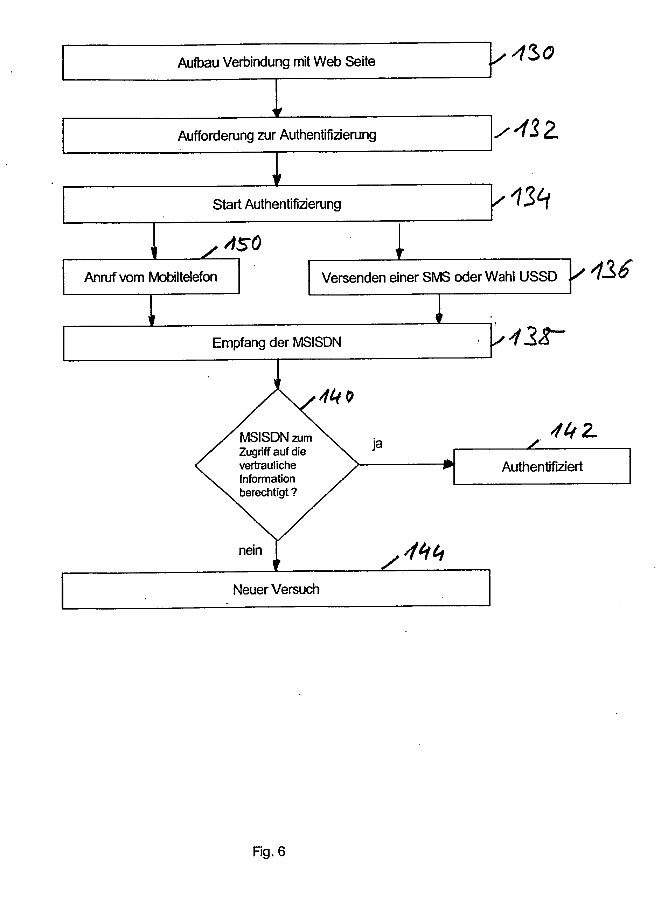

Alternativ kann zur Authentifizierung des Benutzers auch ein Mobiltelefon verwendet werden, wie mit Bezug auf die Ausführungsform der Fig. 5 und das Verfahren der Fig. 6 weiter unten näher erläutert wird.

Alternativ kann der Benutzer auch mittels eines Mobiltelefons 30, welches eine Chipkarte 31, insbesondere eine sogenannte SIM (Subscriber Identification Module), aufweist mit der Web-Seite 11 des Online-Shops 10 Verbindung aufnehmen. Dies erfordert ein internetfähiges Mobiltelefon 30, beispielsweise nach dem UMTS Standard oder auch ein nach dem GSM Standard arbeitendes Mobiltelefon, beispielsweise den Nokia Communicator, oder ein sogenanntes WAP Mobiltelefon, wobei dann die Web-Seite 11 entsprechend angepasst sein muss.

Der Benutzer kann von seinem Mobiltelefon 30 sein Guthaben auf dem Konto-Server 25 mit einer Guthaben-Karte auffüllen, wie das an sich aus dem Stand der Technik an sich bekannt ist (vgl. Fig. 1). Dieses Guthaben kann der Benutzer zur Entrichtung von Telefongebühren verwenden; erfindungsgemäß kann er dieses Guthaben auch zur Bezahlung von Online-Produkten benutzen.

Der Benutzer nimmt zunächst mit der Web-Seite 11 des Online-Shops 10 Kontakt auf, indem eine entsprechende Verbindung von seinem Client-Gerät, das heißt, wahlweise von dem Mobiltelefon 30 oder dem Computer 28, über das Netzwerk 27 mit dem Online-Shop 10 hergestellt wird. Hierzu gibt der Benutzer beispielsweise die sogenannte URL (Uniform Resource Locator) des Online-Shops 10 in das Browser-Programm des Mobiltelefons 30 bzw. des Computers 28 ein.

Der Benutzer wählt dann auf der Web-Seite 11 Online Produkte aus, die in dem Wartenkorb 13 gesammelt werden. Durch Betätigung des Betätigungselements 12 auf der Web-Seite 11 gibt der Benutzer dann seine Kaufentscheidung hinsichtlich der Online-Produkte in dem Warenkorb 13 ein. Für die Bezahlung kann der Benutzers beispielsweise zwischen verschiedenen Verfahren, z. B. Bezahlung mittels Kreditkarte, Bankeinzugsverfahren oder gegen Rechnung wählen. Er kann jedoch auch das erfindungsgemäße Bezahlverfahren wählen. Die Wahl des Bezahlverfahrens kann in einem Benutzerprofil hinterlegt sein, so dass der Benutzer außer der Betätigung des Betätigungselements 12 keine weitere Eingabe-Operation vornehmen muss.

Durch die Betätigung des Betätigungselements 12 wird das Programm 15 auf dem Server des Online-Shop automatisch gestartet. Die Programmkomponente 17 generiert eine Transaktionsdatei, die zumindest den zu bezahlenden Betrag entsprechend des Werts der Online-Produkte in dem Warenkorb 13 beinhaltet, sowie die Kennung 14 des Online-Shops 10. Ferner beihaltet die Transaktionsdatei auch eine Transaktionsnummer für die gekauften online Produkte des Warenkorbs.

Die Verbindung zwischen dem Mobiltelefon 30 bzw. dem Computer 28 mit dem Online-Shop 10 wird mittels der Programmkomponente 16 zu dem Web-Server 18 geroutet und die Transäktionsdatei wird dabei als Parameter mit zu dem Web-Server 18 übergeben. Auf diese Art und Weise wird das Mobiltelefon 30 bzw. der Computer 28 mit der Web-Seite 19 des Web-Server Computers 18 verbunden.

Auf der Web-Seite 19 authentifiziert sich der Benutzer durch Eingabe von Authentifizierungsdaten in das Authentifizierungsmodul 20, beispielsweise also durch Eingabe von Benutzernamen und Passwort. Nach der erfolgreichen Authentifizierung des Benutzers wird das Programm 22 aufgerufen.

Die Programmkomponente 24 nimmt dann Verbindung mit dem Konto-Server 25 auf, und fragt mit dem Kunden als Schlüssel dessen Guthaben von der Datenbank 26 ab. Als Schlüssel für den Zugriff auf die Datenbank 26 kann der für die Authentifizierung eingegebene Benutzername oder die Telefonnummer des Kunden verwendet werden, die dem Benutzernamen zugeordnet ist und auf dem Web-Server gespeichert ist. Ebenso ist es möglich, dass die Telefonnummer des Kunden als Benutzername verwendet wird.

Das von der Programmkomponente 24 von der Datenbank 26 des Konto-Servers 25 abgefragte Guthaben des Kunden wird mit dem zu bezahlenden Betrag der Transaktionsdatei verglichen. Wenn das Guthaben des Betrags ausreichend ist, erfolgt eine entsprechende Belastung des Guthabens. Der entsprechende Umsatz wird in der Datenbank 21 dem Online-Shop 10 unter dessen Kennung 14 ("Shop ID") für die spätere Abrechnung gutgeschrieben.

Mittels der Programmkomponente 23 wird de Verbindung zwischen dem Mobiltelefon 30 bzw. dem Computer 28 und dem Web-Server 18 zurück zu dem Online-Shop 10 geroutet. Femer kann der Online-Shop 10 eine Transaktionsbestätigung von dem Web-Server 18 erhalten, so dass der Benutzer, nachdem seine Verbindung zu dem Online-Shop 10 zurück geroutet worden ist, auf der Web-Seite 11 eine Aufforderung zur Vornahme weiterer Online-Einkäufe von Online-Produkten erhält. Teil der Transaktionsbestätigung ist die entsprechende Transaktionsnummer.

Von besonderem Vorteil ist hierbei, dass die Authentifizierung des Benutzers ausschließlich gegenüber dem Web-Server 18 erfolgt und nicht gegenüber dem Online-Shop 10, so dass der Benutzer gegenüber dem Online-Shop 10 anonym bleiben kann.

Im Falle der Verwendung des Computers 28 für das Online-Shopping kann dessen Chipkartenlesegerät 29 für die Authentifizierung gegenüber dem Authentifizierungsmodul 20 des Web-Servers 18 verwendet werden, wie es an sich aus dem Stand der Technik bekannt ist.

Ferner ist es möglich, das System der Fig. 2 so zu gestalten, dass bei Benutzung des Mobiltelefons 30 das Guthaben in der Datenbank 26 mit den Mobiltelefongebühren belastet wird. Das heißt, das Guthaben in der Datenbank 26 kann auf zweierlei Arten verwendet werden: einerseits für die Bezahlung von Telefongebühren und andererseits zur Bezahlung von auf dem Online-Shop 10 oder weiterer Online-Shops von dem Benutzer gekaufter Produkte. Prinzipiell ist die Anzahl der Online-Shops bei Verwendung der Internet-Technologie unbegrenzt.

Das System der Fig. 2 kann jedoch auch so ausgestaltet sein, dass der Kunde getrennte Guthaben für Online-Shopping und für die Entrichtung von Telefongebühren hat.

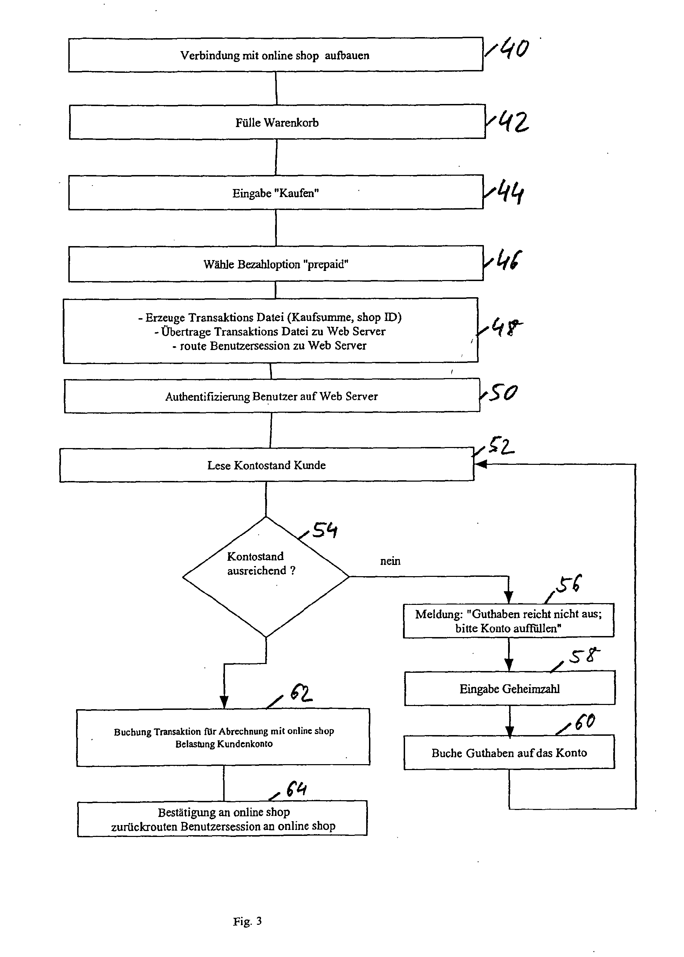

Die Fig. 3 zeigt ein entsprechendes Flussdiagramm. In dem Schritt 40 wird zunächst eine Verbindung mit einem Online-Shop von einem Mobiltelefon, einem Computer oder einem anderen onlinefähigen Geräte, z. B. einem Personal Digital Assistant oder einen sogenannten Web-Pad aufgebaut. In dem Schritt 42 füllt der Benutzer einen virtuellen Warenkorb des Online-Shops durch Auswahl von verschiedenen Online-Produkten. In dem Schritt 44 gibt der Benutzer seine Kaufentscheidung für die Produkte in dem virtuellen Warenkorb ein.

In dem Schritt 46 wählt der Benutzer die Bezahloption "pre-paid", das heißt, die Belastung seines eingezahlten Guthabens, z. B. bei seiner Telefongesellschaft.

In dem Schritt 48 wird eine Transaktionsdatei automatisch generiert, die zumindest die Kaufsumme sowie eine Kennung des Online-Shops beinhaltet und auch eine Transaktionsnummer. Diese Transaktionsdatei wird zu einem Web-Server übertragen, wobei dies gleichzeitig mit dem Routing der entsprechenden Benutzersession zu dem Web-Server erfolgen kann.

In dem Schritt 50 hat sich der Benutzer zunächst gegenüber dem Web-Server zu authentifizieren. Dies kann beispielsweise durch Eingabe der Telefonnummer des Benutzers und eine Passworts oder durch ein anderes Authentifizierungsverfahren erfolgen. In dem Schritt 52 wird seitens des Web-Servers der Kontostand des Kunden gelesen.

In dem Schritt 54 wird geprüft, ob das Guthaben des Kunden für die Bezahlung der Kaufsumme ausreichend ist. Ist dies nicht der Fall, so erhält der Benutzer in dem Schritt 56 eine entsprechende Meldung und wird zur Auffüllung des Kontos aufgefordert. Dies kann in einer an sich bekannten Art und Weise (vgl. Fig. 1) durch Eingabe einer Geheimzahl einer Guthaben-Karte in dem Schritt 58 erfolgen. Das entsprechende Guthaben wird in dem Schritt 60 von dem Web-Server dem Konto des Benutzers gutgeschrieben. Danach geht die Ablaufsteuerung zurück zu dem Schritt 52, um den neuen Kontostand des Kunden zu lesen und in dem Schritt 54 die Höhe des Guthabens erneut zu prüfen.

Wenn die Prüfung in dem Schrift 54 ergibt, dass das Guthaben ausreichend ist, so wird die Transaktion in dem Schritt 62 für die Abrechnung mit dem Online-Shop gebucht, das heißt, die Kaufsumme wird dem Online-Shop unter dessen Kennung für eine spätere Abrechnung mit dem Betreiber des Web-Servers, z. B. der Telefongesellschaft, gutgeschrieben.

Ferner wird in dem Schritt 62 das Kundenkonto mit der Kaufsumme belastet. In dem Schritt 64 erfolgt eine Bestätigung der Transaktion an den Online-Shop seitens des Web-Servers. Die Benutzersession wird an den Online-Shop automatisch zurück geroutet, so dass der Benutzer weitere Einkäufe tätigen kann.

Die Lieferung der Online-Produkte erfolgt durch die Übertragung von entsprechenden Daten von dem Online-Shop an das Client-Gerät des Benutzers, das heißt, an dessen Mobiltelefon, Computer oder ein anderes Gerät mittels dessen der Benutzer die Verbindung mit dem Online-Shop hergestellt hat.

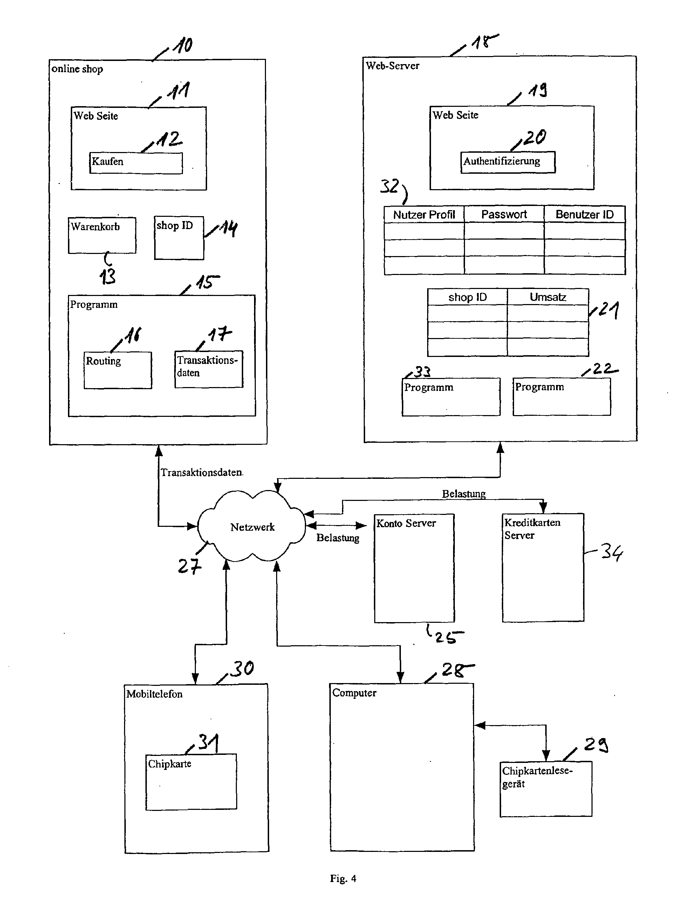

Die Fig. 4 zeigt ein Blockdiagramm einer weiteren Ausgestaltung des Systems der Fig. 2. Elemente der Fig. 4, die Elementen der Fig. 2 entsprechen sind mit denselben Bezugszeichen gekennzeichnet.

Der Web-Server 28 des Systems der Fig. 4 beinhaltet eine weitere Datenbank 32, in der jedem Benutzer eine Benutzerkennung "Benutzer ID" sowie ein entsprechendes Passwort und ein Nutzerprofil zugeordnet ist. Zur Authentifizierung gibt der Benutzer in der Web-Seite 19 seine Benutzer ID und sein Passwort ein. Ferner ist es möglich zur Authentifizierung ein Mobiltelefon zu verwenden, wie weiter unten mit Bezug auf die Figuren 5 und 6 noch näher erläutert wird.

Alternativ kann jedes beliebige andere Authentifizierungsverfahren benutzt werden, z.B. mittels Chipkartenlesegerät 29.

Damit kann dann seitens des Web-Servers 18 auf das Nutzerprofil des Benutzers zugegriffen werden. Das Benutzerprofil beinhaltet Daten zur Abwicklung der Bezahlung seitens des Web-Servers, wie z. B. die Kreditkartennummer des Benutzers, die Kontonummer des Benutzer für einen Bankeinzug und / oder eine Rechnungsanschrift für die Versendung einer Rechnung von dem Web-Server 18 an den Benutzer in Höhe des an den Online-Shop zu bezahlenden Betrags.

Der Benutzer kann auf der Web-Seite 19 die gewünschte Bezahloption wählen, das heißt, die Bezahlung von seinem pre-paid Konto auf dem Konto-Server 25, die Bezahlung mittels Bankeinzug oder per Rechnung sowie auch die Bezahlung durch Belastung von der Kreditkarte des Benutzers.

Für den Fall, dass der Benutzer die Zahlung per Kreditkarte als Option wählt, wird das Programm 33 des Web-Servers 18 aufgerufen. Das Programm 33 übermittelt die notwendigen Kreditkarteninformationen des Benutzers aus dem Nutzerprofil und den zu zahlenden Betrag über das Netzwerk 27 an einen Kreditkarten-Server 34 des Kreditkarteninstituts.

Auf der anderen Seite kann der Benutzer auch bei der Ausgestaltung des Systems entsprechend der Fig. 4 die Bezahloption durch Belastung seines pre-paid Kontos auf dem Kontoserver 25 auf der Web-Seite 19 auswählen. In diesem Fall wird das Programm 22 aufgerufen, welches mit dem Kontoserver 25 über das Netzwerk 27 Kontakt aufnimmt, um die Kontoprüfung und Kontobelastung durchzuführen - entsprechend des diesbezüglichen Vorgehens in dem System der Fig. 2.

Die Fig. 5 zeigt ein Blockdiagramm einer Ausführungsform des erfindungsgemäßen Systems, bei der die Authentifizierung des Benutzers gegenüber dem Web-Server 18 mittels des Mobiltelefons 30 erfolgt. Elemente der Fig. 5, die Elementen der Fig. 2 entsprechen, sind im Weiteren mit denselben Bezugszeichen gekennzeichnet.

In der Ausführungsform der Fig. 5 wird das Authentifizierungsmodul 20 (cf. Fig. 2) wie folgt realisiert:

Die Web-Seite 19 hat ein Bedienelement 103, z. B. in Form eines sogenannten virtuellen "But-ton". Auf der Web-Seite 19 wird der Benutzer zur Authentifizierung aufgefordert. Die Authentifizierung wird vom Benutzer durch Selektion des Bedienelements 103 gestartet. Hierzu kann das Bedienelement 103 beispielsweise die Aufschrift tragen "jetzt authentifizieren" oder dergleichen haben.

Durch Betätigung des Bedienelements 103 durch den Benutzer wird ein Programm 105 gestartet.

Das Programm 105 beinhaltet ein Programmmodul 106 mit dem der Benutzer zur Vornahme einer Handlung aufgefordert wird, um dessen Zugriffsberechtigung auf die gewünschten Daten zu überprüfen. Nachdem der Benutzer beispielsweise das Bedienelement 103 betätigt hat, erhält der Benutzer eine Aufforderung, die durch das Programmmodul 106 generiert wird, um eine der folgenden Handlungen vorzunehmen:
- Anruf einer Telefonnummer des Web-Server 18 mit seinem Mobiltelefon, so dass die MSISDN des Mobiltelefons an den Web-Server 18 übertragen wird,
- Versenden einer elektronischen Nachricht, beispielsweise einer SMS, von dem Mobiltelefon, so dass ebenfalls die MSISDN des Mobiltelefons zu dem Web-Server 18 übertragen wird oder
- Wahl einer USSD Nummer, so dass ebenfalls die MSISDN des Mobiltelefons an den Web-Server 18 übertragen wird.

Zusätzlich kann es erforderlich sein, dass der Benutzer weitere Daten für seine Authentifizierung eingibt. Zur Authentifizierung kann beispielsweise eine dem Benutzer zugewiesene PIN dienen.

Die PIN muss dann von dem Benutzer
- nach Aufbau der Telefonverbindung über die Tastatur seines Mobiltelefons eingegeben werden oder
- als Nutzinformation der elektronischen Nachricht, das heißt, der SMS, gesendet werden oder
- als zusätzlicher Parameter der USSD Nummer über das Mobiltelefon eingegeben w

Ferner ist es auch möglich, dass ein zusätzliches Chipkartenlesegerät 29 für die Authentifizi" rung des Benutzers verwendet wird.

Das Programm 105 beinhaltet ferner ein Programmmodul 107 zum Starten einer Zeituhr, eine sogenannten Timers, nachdem der Benutzer das Bedienelement 103 oder das Bedienelement 1( betätigt hat. Beispielsweise kann der Timer durch des Programmmodul 107 gestartet werden, nachdem die Aufforderung des Programmmoduls 106 dem Benutzer angezeigt worden ist.

Ferner hat das Programm 105 ein Programmmodul 108 zur Überwachung, ob innerhalb eines vorgegebenen Zeitfensters nach dem Start des Timers durch das Programmmodul 107 eine MSISDN eingeht. Eine innerhalb des Zeitfensters eingehende MSISDN wird von dem Programmmodul 108 mittels eines Datenbanksystems 109 überprüft.

In dem Datenbanksystem 109 befindet sich eine Liste 110 und eine Liste 111 von gültigen MSISDNs. Die Liste 110 ist dem Bedienelement 103 zugeordnet; die Liste 111 ist dem Bedienelement 104 zugeordnet. Ferner gehört zu dem Datenbanksystem 109 eine Tabelle 112, in der die MSISDNs sämtlicher registrierter Benutzer erfasst sind. Zu jeder MSISDN gehört ein Benutzerprofil, welches beispielsweise zusätzliche Daten zur Benutzerauthentifizierung, z. B. eine PIN, und weitere Angaben hinsichtlich des Benutzers, z. B. dessen Name, Adresse, Telefonnummer, Faxnummer und E-Mail-Adresse und / oder Zahlungsdaten, z. B. die Kreditkartennummer, beinhaltet.

Der Web-Server 18 hat ferner eine Mobiltelefon-Schnittstelle 113 zur Entgegennahme von Anrufen von einem Mobiltelefon 30 und / oder von elektronischen Nachrichten, insbesondere SMS Nachrichten, und zur Entgegennahme von Anrufen mit einer USSD Nummer und gegebenenfalls weiteren Parametern.

Der Computer 28, beispielsweise ein üblicher Personal Computer, ist als Client über das Netzwerk 27 mit dem Web-Server 18 verbindbar. Bei dem Netzwerk 27 kann es sich um ein Computernetzwerk, beispielsweise ein Intranet, Extranet oder das Internet handeln. Über den Computer 28 und das Netzwerk 27 kann ein Benutzer auf den Web-Server 18 bzw. dessen Web-Seite 19 zugreifen. Die Web-Seite 19 wird beispielsweise auf dem Computer 28 mittels eines Browsers angezeigt, z. B. mittels Microsoft Explorer oder Netscape Navigator.

Der Computer 28 kann das Chipkartenlesegerät 16 aufweisen, z. B. als zusätzliche Sicherheit für die Authentifizierung des Benutzers.

Der Benutzer des Computers 14 verfügt ferner über das Mobiltelefon 30, das beispielsweise nach dem GSM Standard arbeitet. Das Mobiltelefon 30 hat einen integrierten Chipkartenleser für eine Chipkarte 31. Die Chipkarte 31 ist beispielsweise als sogenanntes Subscriber Identification Module (SIM) ausgebildet und beinhaltet die MSISDN als Mobiltelefon-Kennung des Benutzers.

Der Benutzer kann mit dem Mobiltelefon 30 über ein Mobiltelefonnetz 119 den Web-Server 18 anrufen. Bei einem solchen Anruf wird die auf der Chipkarte 31 gespeicherte MSISDN als Mobiltelefon-Kennung über das Mobiltelefonnetz 119 zu der Mobiltelefon-Schnittstelle 113 des Web-Server 18 übertragen. Ebenso wird die MSISDN auch zu der Mobiltelefon-Schnittstelle 113 übertragen, wenn der Benutzer von dem Mobiltelefon 30 eine SMS versendet oder eine USSD Nummer wählt.

Um auf bestimmte Daten des Web-Server 18 zuzugreifen, gibt der Benutzer zunächst die Internetadresse, das heißt, die sogenannte URL, der Web-Seite 19 in sein Browserprogramm des Computers 14 ein. Über das Netzwerk 27 wird dann eine Verbindung mit dem Web-Server 18 hergestellt und die Web-Seite 19 wird auf dem Browserprogramm des Computers 14 dem Benutzer zur Anzeige gebracht. Der Benutzer kann dann die Authentifizierung durch Selektion des Bedienelements 103 der Web-Seite 19 starten, beispielsweise dadurch, dass der Benutzer das Bedienelement 103 "anklickt".

Durch das Anklicken des Bedienelements 3 wird das Programm 105 gestartet und zwar insbesondere dessen Programmmodul 106. Durch das Programmmodul 106 wird für den Benutzer eine Anzeige generiert und der Benutzer aufgefordert, eine Aktion für die Authentifizierung durchzuführen. Beispielsweise kann der Benutzer zwischen verschiedenen möglichen Aktionen auswählen:
- Anruf einer Telefonnummer des Web-Server 18 von seinem Mobiltelefon 30,
- Versenden einer SMS an die Telefonnummer des Web-Server 18 von dem Mobiltelefon 30 oder
- Anruf einer USSD Nummer des Web-Server 18 von dem Mobiltelefon 30.

Zusätzlich kann es erforderlich sein, dass der Benutzer weitere zur Authentifizierung erforderliche Parameter eingibt.

Nach der Anzeige der durch das Programmmodul 106 generierten Aufforderung wird durch das Programmmodul 107 ein Timer gestartet und das Programmmodul 108 überwacht, ob innerhalb eines vorgegebenen Zeitfensters eine Mobiltelefonkennung eingeht.

Der Benutzer des Computers 28 ruft dann beispielsweise, nachdem er die durch das Programmmodul 106 generierte Aufforderung erhalten hat, mit seinem Mobiltelefon 30 die Telefonnummer des Web-Server 18 an. Bei diesem Anruf wird die MSISDN des Mobiltelefons 30 mit über das Mobiltelefonnetz 119 mit zu der Mobiltelefon-Schnittstelle 113 des Web-Server 18 übertragen.

Wenn die von der Mobiltelefon-Schnittstelle 113 empfangene MSISDN innerhalb eines durch den Start des Timers definierten Zeitfensters erhalten wird, überprüft das Programmmodul 108 dann die MSISDN auf ihre Gültigkeit. Hierzu führt das Programmmodul 108 einen Zugriff auf das Datenbanksystem 109 durch.

Hat der Benutzer etwa das Bedienelement 103 angeklickt, so greift das Programmmodul 108 auf die dem Bedienelement 103 zugeordnete Liste 110 zu, um zu prüfen, ob die innerhalb des Zeitfensters empfangene MSISDN Teil der Liste 110 ist. Ist dies der Fall, so gilt der Benutzer als authentifiziert.

Mit der MSISDN als Schlüssel greift das Programm 105 dann auf die Tabelle 112 zu, um das Benutzerprofil des Benutzers zu lesen. Das Benutzerprofil kann insbesondere Angaben hinsichtlich der Art und Weise der Abwicklung der Zahlung beinhalten, also z. B. die Optionen Belastung eines pre-paid Kontos (vgl. Fig. 2 und Fig. 4) oder Kreditkartenzahlung (vgl. Fig. 4), sowie auch Bankeinzug oder Zahlung per Rechnung. Nachdem die Authentifizierung erfolgt ist, laufen die möglichen weiteren Schritte wie mit Bezug auf die Figuren 2 und 3 sowie die Figur 4 erläutert ab.

Wenn der Benutzer an Stelle einer Telefonanrufs eine SMS versendet oder eine USSD Nummer wählt, so wird von der Mobiltelefon-Schnittstelle 113 ebenfalls die MSISDN Nummer des Mobiltelefons 30 empfangen, welche auf dieselbe Art und Weise von dem Programmmodul 108 verarbeitet wird.

Wenn innerhalb des vorgegebenen Zeitfensters keine gültige MSISDN für den Zugriff auf die gewünschten Daten seitens des Servercomputers 1 empfangen wird, so kann entweder der Zugriff entgültig verweigert werden oder der Benutzer erhält eine oder mehrere weitere Versuche, um jeweils innerhalb des vorgegebenen Zeitfensters die erforderliche Aktion, z. B. also den Anruf mit dem Mobiltelefon 30 vorzunehmen.

Ferner kann es erforderlich sein, dass der Benutzer zusätzliche Daten für seine Authentifizierung eingibt. Dies kann so erfolgen, dass der Benutzer nach dem Aufbau der Telefonverbindung zwischen seinem Mobiltelefon 30 und der Mobiltelefon-Schnittstelle 113 des Web-Server 18 über die Tastatur des Mobiltelefons 30 seine PIN eingibt oder die PIN als Nutzinformation mit einer SMS übertragen wird. Ferner kann die PIN auch als Parameter einer USSD Nummer übertragen werden, z. B. in der Form *103*2108#, wobei es sich bei *103 um die eigentliche USSD Nummer und bei *2108 um die PIN handelt.

Als zusätzliche Sicherheitsmaßnahme ist es auch möglich, das Chipkartenlesegerät 29 des Computers 28 zu verwenden, um beispielsweise eine Chipkarte mit dem privaten Schlüssel des Benutzers für dessen Authentifizierung zu verwenden.

Für die Authentifizierung des Benutzers wird dann von dem Programm 105 auf die Tabelle 112 des Datenbanksystem 109 zugegriffen, um die von dem Benutzer zu dessen Authentifizierung eingegebenen Daten mit dem entsprechenden Benutzerprofil abzugleichen. Dadurch ist eine erhöhte Sicherheit für die Datenzugriffskontrolle gegeben.

Alternativ ist es auch möglich, dass sowohl der Datenzugriff als auch die Datenzugriffskontrolle nur mittels des Mobiltelefons 30 ohne den Computer 28 durchgeführt werden. In diesem Fall handelt es sich um intemetfähiges Mobiltelefon 30, das beispielsweise nach dem UMTS Standard arbeitet.

Von diesem Mobiltelefon 30 wird dann über das entsprechend ausgebildete UMTS Mobiltelefonnetz 119 auf die Web-Seite 19 zugegriffen und das Bedienelement 103 betätigt. Für die Authentifizierung kann dann automatisch eine in dem Mobiltelefon 30, beispielsweise auf dessen Chipkarte 31, gespeicherte Mobiltelefon-Kennung, z. B. auf die Telefonnummer des Mobiltelefons 30 zugegriffen werden.

Diese wird dann über die UMTS Verbindung zu dem Web-Server 18 übertragen und dort entsprechend ausgewertet. In diesem Fall ist es nicht erforderlich, dass der Benutzer zur Vornahme einer Aktion aufgefordert wird, sondern die entsprechende Aktion kann vollautomatisch ablaufen. Entsprechend wird der Timer in diesem Fall nicht mit der Anzeige einer Aufforderung gestartet, sondern bereits mit der Betätigung des Bedienelements 103. In diesem Fall kann ein sehr kurzer Timerwert, das heißt, ein sehr kleines Zeitfenster wegen des automatischen Ablaufs vorgesehen sein. In diesem Ausführungsbeispiel benötigt der Benutzer keinen zusätzlichen Computer, sondern das Mobiltelefon 30 nimmt die Funktion des Computers wahr.

Die Fig. 6 zeigt eine Ausführungsform eines entsprechenden Verfahrens.

In dem Schritt 130 wird eine Verbindung mit der Web-Seite (cf. Web-Seite 19 der Fig. 2, 4 und 5) hergestellt, indem die Internetverbindung mit einem Online-Shop (vgl. Online-Shop 10 der Figuren 2 und 4) mit einem Benutzer zu der Web-Seite 19 bzw. dem entsprechenden Web-Server geroutet wird. In dem Schritt 132 wird dem Benutzer auf der Web-Seite eine Aufforderung zur Authentifizierung angezeigt. Die Authentifizierung wird von dem Benutzer in dem Schritt 134 durch Selektion eines Bedienelements auf der Web-Seite gestartet. Alternativ kann der für die Authentifizierung erforderliche Ablauf auch automatisch von der Web-Seite gestartet werden, nachdem die Verbindung des Benutzers zu der Web-Seite geroutet worden ist.

Für seine Authentifizierung ruft der Benutzer in dem Schritt 150 eine bestimmte Telefonnummer, die der Web-Seite zugeordnet ist, an, sodass die MSISDN seines Mobiltelefons zu der gewählten Nummer übertragen wird.

Alternativ kann der Benutzer auch eine SMS in dem Schritt 136 versenden oder auch eine USSD Nummer wählen. In dem Schritt 138 wird die MSISDN serverseitig empfangen.

Bei Verwendung eines internetfähigen Mobiltelefons können die Schritte 134 und 150 bzw. 136 durch einen automatischen Ablauf ersetzt werden, indem die MSISDN Nummer oder eine andere Mobiltelefon-Kennung des internetfähigen Mobiltelefons automatisch nach der Anforderung der vertraulichen Information in dem Schritt 132 zu dem Server übertragen wird, um dort überprüft zu werden.

In dem Schritt 140 erfolgt die Überprüfung der MSISDN, indem die empfangen MSISDN mit einer Liste von autorisierten MSISDN Nummern verglichen wird. In einer solchen Liste sind sämtliche MSISDNs von registrierten Benutzers gespeichert. Wenn in dieser Liste die empfangene MSISDN enthalten ist, wird mit dieser MSISDN als Schlüssel auf ein Benutzerprofil zugegriffen und der Benutzer gilt damit als authentifiziert.

Wenn es sich um keine gültige MSISDN der Liste handelt oder wenn innerhalb eines vorgegebenen Zeitfensters keine MSISDN empfangen wird, so wird dem Benutzer in dem Schritt 144 vorzugsweise die Gelegenheit gegeben, einen weiteren Versuch für seine Authentifizierung zu starten. Hierzu wird dann z. B. zu dem Schritt 134 zurückverzweigt. Die Anzahl der Versuche des Benutzers kann z. B. auf drei Versuche begrenzt sein.

War auch nach drei Versuchen die Authentifizierung des Benutzers nicht erfolgreich, so gilt der Benutzer als entgültig nicht authentifiziert und die Benutzersession wird mit einer entsprechenden Nachricht an den Online-Shop von der Web-Seite bzw. dem Web-Server zurückgeroutet. Die Nachricht der Web-Seite an den Online-Shop hat den Inhalt, dass die Zahlung nicht abgewickelt werden konnte und beinhaltet auch die Transaktionsnummer des Vorgangs.

### Bezugszeichenliste

- Kontoserver: 1
- Telefonschnittstelle: 2
- Datenbank: 3
- Datenbank: 4
- Guthaben-Karte: 5
- Geheimzahl: 6
- Mobiltelefon: 7
- Telefonnummer: 8
- Tastatur: 9
- Online-Shop: 10
- Web-Seite: 11
- Betätigungselement: 12
- Warenkorb: 13
- Kennung: 14
- Programm: 15
- Programmkomponente: 16
- Programmkomponente: 17
- Web-Server: 18
- Web-Seite: 19
- Authentifizierungsmodul: 20
- Datenbank: 21
- Programm: 22
- Programmkomponente: 23
- Programmkomponente: 24
- Kontoserver: 25
- Datenbank: 26
- Netzwerk: 27
- Computer: 28
- Chipkartenlesegerät: 29
- Mobiltelefon: 30
- Chipkarte: 31
- Datenbank: 32
- Programm: 33
- Kreditkartenserver: 34
- Bedienelement: 103
- Bedienelement: 104
- Programm: 105
- Programmmodul: 106
- Programmmodul: 107
- Programmmodul: 108
- Datenbanksystem: 109
- Liste: 110
- Liste: 111
- Tabelle: 112
- Mobiltelefon-Schnittstelle: 113
- Mobiltelefonnetz: 119

## Patentansprüche

1. Verfahren zur bargeldlosen Bezahlung mit folgenden Schritten:
- Übertragung eines von einem Benutzer zu bezahlenden Betrags von einem Online-Shop an einen Web-Server,
- Authentifizierung des Benutzers gegenüber dem Web-Server,
- Belastung eines Kontos des Benutzers seitens des Web-Servers.

2. Verfahren nach Anspruch 1, wobei der Betrag für ein Online-Produkt zu bezahlen ist, beispielsweise für eine Online-gelieferte Ware und / oder eine Online-erbrachte Dienstleistung.

3. Verfahren nach Anspruch 1 oder 2 mit folgenden weiteren Schritten:
- Herstellung einer Verbindung zwischen einem Client-Gerät des Benutzers mit dem Online-Shop über ein Netzwerk,
- Empfang des Online-Produkts über die Verbindung.

4. Verfahren nach einem der vorhergehenden Ansprüche 1, 2 oder 3 mit folgenden weiteren Schritten:
- Eingabe einer Kaufentscheidung in den Online-Shop durch den Benutzer,
- Übertragung des von dem Benutzer zu bezahlenden Betrags nach Eingabe der Kaufentscheidung.

5. Verfahren nach einem der vorhergehenden Ansprüche 1 bis 4, bei dem eine Kennung des Online-Shops zu dem Web-Server übertragen wird und die Belastung des Kontos der Kennung zugeordnet wird.

6. Verfahren nach einem der vorhergehenden Ansprüche 1 bis 5, bei dem ein Routing einer Session des Benutzers mit dem Online-Shop zu dem Web-Server erfolgt.

7. Verfahren nach einem der vorhergehenden Ansprüche 1 bis 6, bei dem die Authentifizierung des Benutzers gegenüber dem Web-Server durch Eingabe einer Benutzerkennung und eines Passworts auf einer Web-Seite des Web-Servers erfolgt.

8. Verfahren nach einem der Ansprüche 1 bis 7, bei dem die Authentifizierung des Benutzers gegenüber dem Web-Server durch Eingabe einer Mobiltelefon-Kennung des Benutzers in den Web-Server erfolgt und die Eingabe der Mobiltelefon-Kennung vorzugsweise durch Anruf einer dem Web-Server zugeordneten Nummer von dem Mobiltelefon oder durch Versenden einer elektronischen Nachricht, z. B. einer SMS, oder durch Wahl einer USSD Nummer erfolgt.

9. Verfahren nach einem der vorhergehenden Ansprüche 1 bis 8, bei dem die Authentifizierung des Benutzers gegenüber dem Web-Server mittels eines clientseitigen Chipkartenlesegeräts und einer entsprechenden Chipkarte erfolgt.

10. Verfahren nach einem der vorhergehenden Ansprüche 1 bis 9, bei dem vor der Belastung des Kontos zunächst geprüft wird, ob das entsprechende Guthaben des Benutzers ausreichend ist.

11. Verfahren nach einem der vorhergehenden Ansprüche 1 bis 10, bei dem der Benutzer eine Aufforderung zum Auffüllen seines Guthabens automatisch erhält, wenn das Guthaben nicht für die Belastung mit dem zu bezahlenden Betrag ausreichend ist.

12. Verfahren nach einem der vorhergehenden Ansprüche 1 bis 11, bei dem der Online-Shop von dem Web-Server automatische eine Bestätigung erhält, wenn die Belastung des Kontos erfolgt ist.

13. Verfahren nach einem der vorhergehenden Ansprüche 1 bis 12, bei dem die Benutzersession mit dem Web-Server automatisch zu dem Online-Shop zurückgeroutet wird, nachdem eine Überprüfung des Kontostandes erfolgt ist und / oder die Belastung des Kontos erfolgt ist.

14. Verfahren nach einem der vorhergehenden Ansprüche 1 bis 13, bei dem es sich bei dem Client-Gerät des Benutzers um ein Mobiltelefon oder einen Computer handelt.

15. Online-Shop mit
- Mitteln (17) zur Generierung von Transaktionsdaten,
- Mitteln (16) zum Routing einer Benutzersession zu einem Web-Server (18) und mit
- Mitteln (15) zum Empfang einer Bestätigung von dem Web-Server, dass eine Belastung eines Kontos des Benutzers entsprechend den Transaktionsdaten erfolgt ist, wobei es sich bei dem Konto vorzugsweise um ein pre-paid Konto oder ein Kreditkartenkonto handelt.

16. Online-Shop nach Anspruch 15, wobei die Transaktionsdaten einen von einem Benutzer zu bezahlenden Betrag und eine Kennung (14) des Online-Shops beinhalten.

17. Bezahl-Server (18) zur bargeldlosen Bezahlung mit
- Mitteln (20) zur Authentifizierung eines Benutzers, nachdem eine Session des Benutzers von einem Online-Shop (10) zu dem Bezahl-Server geroutet worden ist,
- Mitteln (22, 24) zur Prüfung eines Guthabens auf einem Konto des Benutzers hinsichtlich des zu bezahlenden Betrags.

18. Bezahl-Server nach Anspruch 17 mit Mitteln (23) zum Zurückrouten der Session des Benutzers mit dem Bezahl-Server zu dem Online-Shop.

19. Bezahl-Server nach Anspruch 17 oder 18 mit Mitteln zum Empfang von Transaktionsdaten von dem Online-Shop, wobei die Transaktionsdaten zumindest den zu bezahlenden Betrag und eine Kennung des Online-Shops beinhalten.

20. Bezahl-Server nach Anspruch 17, 18 oder 19 mit Mitteln zur Verbindung mit einem Konto-Server (25), wobei ein Guthaben für den Benutzer auf dem Konto-Server gespeichert ist und das Guthaben mittels einer Guthaben-Karte auffüllbar ist.

21. Computersystem mit einem Online-Shop (10) nach Anspruch 15 oder 16 und mit einem Bezahl-Server nach einem der vorhergehenden Ansprüche 17 bis 20, wobei der Online-Shop und der Bezahl-Server über ein Netzwerk (27), vorzugsweise das Internet, miteinander verbindbar sind.

22. Computerprogrammprodukt zur Durchführung eines Verfahrens nach einem der vorhergehenden Ansprüche 1 bis 14.

23. Computerprogrammprodukt mit Mitteln (17) zur Generierung von Transaktionsdaten hinsichtlich eines von einem Benutzer zu Gunsten eines Online-Shops zu bezahlenden Betrags und mit Mitteln (16) zum Routing einer Benutzersession mit dem Online-Shop zu einem Web-Server (18), so dass die Transaktionsdaten zu dem Web-Server bei dem Routing der Benutzersession automatisch übertragen werden, und die Mittel zum Empfang eine Bestätigung für die Vornahme der Zahlung.

24. Computerprogrammprodukt nach Anspruch 23, bei dem die Transaktionsdaten zumindest den zu bezahlenden Betrag und eine Kennung (14) des Online-Shops beinhalten.

25. Computerprogrammprodukt nach Anspruch 23 oder 24 mit Mitteln (20) zur Authentifizierung eines Benutzers auf einem Web-Server (18) und mit Mitteln (22, 24) zur Überprüfung eines Kontos des Benutzers hinsichtlich eines gegenüber einem Online-Shop zu bezahlenden Betrags, nachdem entsprechende Transaktionsdaten von dem Online-Shop empfangen worden sind.

26. Computerprogrammprodukt nach Anspruch 23, 24 oder 25 mit Mitteln (21) zur Zuordnung des zu bezahlenden Betrags zu der Kennung des Online-Shops auf dem Web-Server für die Abrechnung mit dem Online-Shop.
